Europäisches Patentamt

European Patent Office

Office européen des brevets

(19)

(11) **EP 0 487 059 B1**

(12) **EUROPEAN PATENT SPECIFICATION**

(45) Date of publication and mention
of the grant of the patent:
**24.07.1996 Bulletin 1996/30**

(51) Int Cl.$^6$: **C08J 7/04**, C08J 7/12

(21) Application number: **91119778.8**

(22) Date of filing: **19.11.1991**

(54) **Method of reducing the friction coefficient between water and surfaces of polymeric bodies**

Verfahren zum Erniedrigen des Reibungskoeffizienten zwischen Wasser und Polymeroberflächen

Procédé pour réduire le coefficient de frottement entre l'eau et la surface d'une article polymère

(84) Designated Contracting States:
**AT BE CH DE DK ES FR GB GR LI NL SE**

(30) Priority: **21.11.1990 IT 2214290**

(43) Date of publication of application:
**27.05.1992 Bulletin 1992/22**

(73) Proprietor: **ENICHEM S.p.A.**
**I-20124 Milano (IT)**

(72) Inventors:
  • **Morra, Marco, Dr.**
    **I-14040 Cortiglione, Asti (IT)**
  • **Occhiello, Ernesto, Dr.**
    **I-28100 Novara (IT)**
  • **Garbassi, Fabio, Dr.**
    **I-28100 Novara (IT)**

(74) Representative: **Weinhold, Peter, Dr. et al**
**Patentanwälte**
**Dr. Weinhold, Dannenberg,**
**Dr. Gudel, Schubert**
**Siegfriedstrasse 8**
**80803 München (DE)**

(56) References cited:
**US-A- 4 188 426**        **US-A- 4 211 276**
**US-A- 4 404 256**

• **DATABASE WPIL, accession no. 87-274411,**
  **Derwent Publications Ltd, London, GB;**
• **& JP-A-62 191 447 (STANLEY ELEK. K.K.)**
  **21-08-1987**
• **IDEM**
• **DATABASE WPIL, accession no. 89-027827,**
  **Derwent Publications Ltd, London, GB; &**
  **JP-A-63 301 241 (HUMAN IND. CORP. K.K.)**
  **08-12-1988**
• **Römpps Chemie Lexikon, 8th edition, pages**
  **2214 to 2218 (D6) The Concise Oxford**
  **Dictionary, 7th edition, page 213, left column**
  **(D7)**

Remarks:
The file contains technical information submitted after the application was filed and not included in this specification

**Description**

METHOD OF REDUCING THE FRICTION COEFFICIENT BETWEEN WATER AND SURFACES OF POLYMERIC BODIES AND OF INCREASING THE WATER REPELLENCY OF SAID SURFACES

The present invention relates to a method for reducing the friction coefficient between water and surfaces of bodies fabricated from polymeric materials having an average value of the contact angle with water of less than 90°, and for increasing the water repellency of said surfaces.

It is well-known that ideal surfaces, characterized by particular morphologies and values of surface energy, display with water the phenomenon known as "composite interface". In this regard, reference may be made to the chapter by R.E. Johnson Jr. and R.H. Dettre in "Surface and Colloid Science", page 85, E. Matijevic (Editor), Wiley-Interscience, New York, 1969, or to the article by A.W. Neumann in: "Advanced Colloids Interface Science", 4, page 105, 1974.

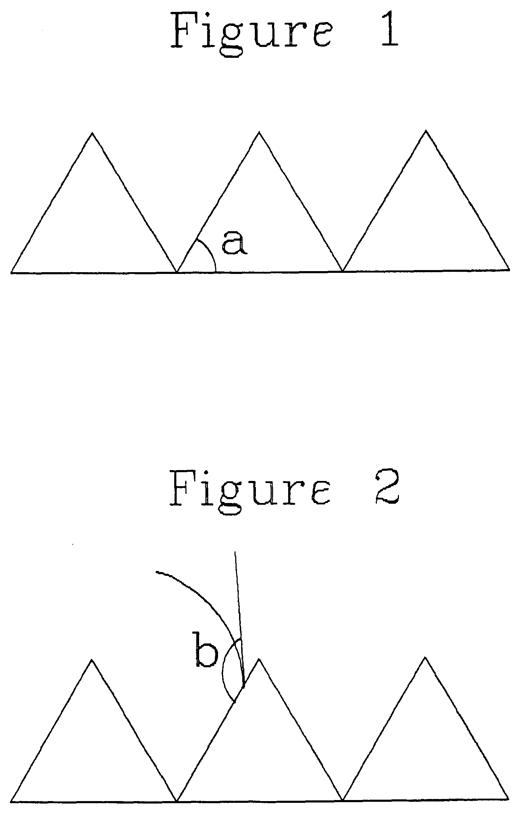

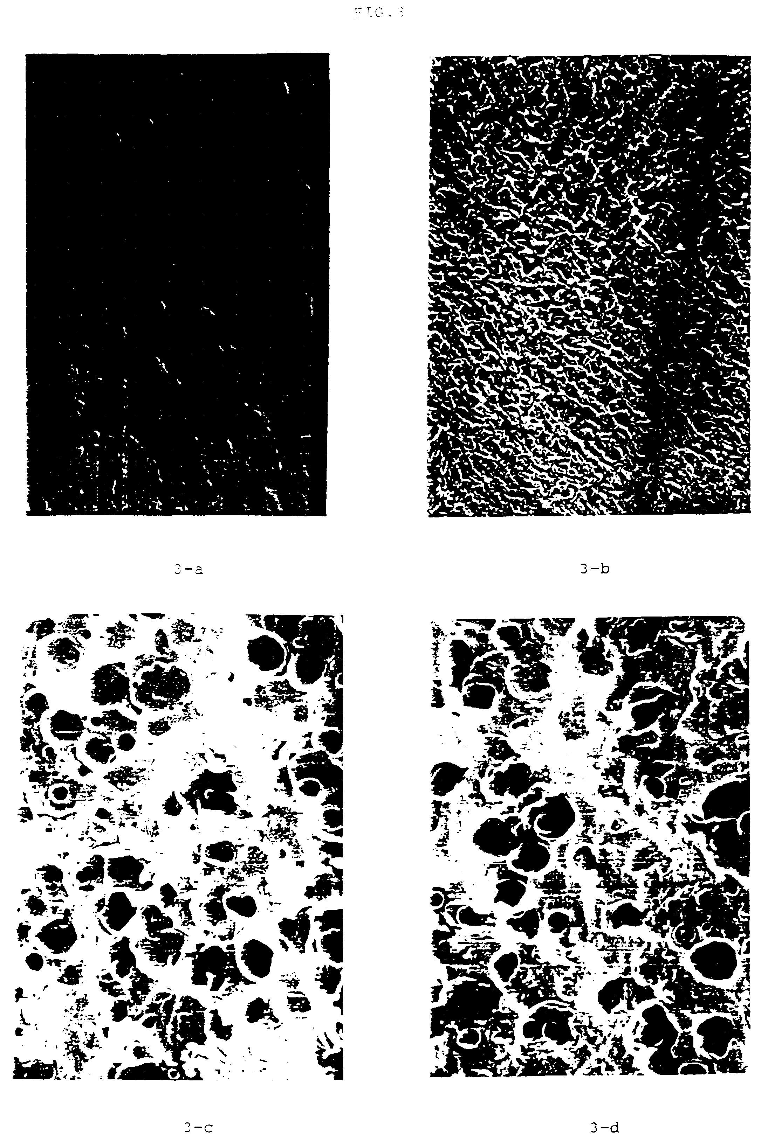

An ideal surface, characterized by a "composite interface" is shown in the accompanying Figures 1 and 2. The required surface morphology is defined by the characteristic geometry, with a slope defined by the angle "a". It being given for granted that the surface forms an equilibrium contact angle with water, as defined in the above references, of value "b", in order to obtain the "composite interface" the condition

$$a \geq 180° - b$$

must necessarily be met.

The other necessary condition for the ideal surface to form, with water, a "composite interface", is that the equilibrium contact angle between said surface and water meets the further condition

$$b > 90°.$$

If both of these conditions are met, water is unable to penetrate the interior of the cavities existing on the surface.

The contact angle, as measured under these conditions, is determined by the Cassie-Baxter relationship, as described by R.E. Johnson Jr. and R.H. Dettre ibid. and can reach very high values.

However, the real polymeric surfaces are very different from the ideal ones, as widely described by S. Wu in "Polymer Interface and Adhesion", M. Dekker, New York, 1982.

First of all, said real surfaces do not show the regular roughness depicted in Figures 1 and 2. Furthermore, their chemical and physical heterogeneity induces the phenomenon known as the "hysteresis of the contact angle", discussed in the above literature. As a consequence of said phenomenon, the real polymeric surfaces display a more or less wide range of thermodynamically and kinetically possible contact angles.

This range is characterized by two limit contact angles, which are referred to as "advancement angle" and "recession angle".

Furthermore, from the state of the art it can be deduced that in general there are no bodies fabricated from polymeric materials which can be obtained by means of the common methods of fabrication of plastic materials whose surfaces display values of said two water contact angles which are higher than 90°.

There has now been found a method through which the surfaces of bodies fabricated from polymeric materials having an average value of the contact angle with water of less than 90° can be modified in a way such that they display the phenomenon of the "composite interface" with water. Said method comprises giving the surface of the body a suitable roughness and thereafter coating it by plasma-induced polymerization of fluorinated monomers.

It has been found that the resulting surfaces show a very high water repellency, and a significant decrease in the friction coefficient between water and such surfaces has been observed as well.

Accordingly, the instant invention provides a method for reducing the friction coefficient between surfaces of fabricated bodies manufactured from polymeric material having an average value of the contact angle with water of less than 90° and water, and increasing the water repellency of said surfaces,

which method consists essentially of:

(a) treating the surface of the article with a corrosive agent selected from acidic oxidizing agents and alkaline agents, until conditions of controlled roughness which are characterized by structures of a size of from 0.2 to 2 μm, preferably of from 0.5 to 1 μm, are obtained; and

(b) coating the surface thus treated by means of plasma-induced polymerization of at least one fluorinated monomer with a layer of fluorinated polymer, said layer having a thickness of from 1 to 1000 nm.

The corrosive treatment of step (a) can be accomplished by known methods, as disclosed, e.g., in S. Wu: "Polymer Interface and Adhesion", page 279; or in I.A. Abu-Isa: "Polymer Plastics Technology Engineering" 2, 29, 1973; or in R.C. Snogren: "Handbook of Surface Preparation", Palmerton, New York, 1974.

As the corrosive agents of the invention there are used acidic oxidizing agents and alkaline agents. Illustrative examples thereof comprise acidic oxidants such as sulfuric acid, hydrochloric acid, phosphoric acid, nitric acid, $(C_1$-$C_{10})$-alkyl-sulfonic acids, difluoroacetic acid, etc., containing, in preferably saturated solution, oxidizing salts such as potassium dichromate, potassium permanganate, sodium hypochlorite, potassium perchlorate, etc.; and alkaline agents, such as alkali-metal hydroxides (sodium hydroxide, potassium hydroxide, etc.).

The generation of a controlled surface roughness, as disclosed hereinabove, can be verified by scanning electron microscopy (SEM) or by the unaided eye in that, with surface structures of a size of from 0.2 to 2 $\mu$m, light scattering phenomena occur which render the surface rough/matt whilst before the treatment said surface had a glossy appearance.

The coating, with a fluorinated polymer, of the surface treated with said corrosive agent(s) is carried out by plasma-induced polymerization. This polymerization technique is known in the art and is described, e.g., in "Plasma Polymerization" by H. Yasuda, Academic Press, Orlando, 1985, and in "Thin Film Processes", edited by J.L. Vossen and W. Kern, Academic Press, New York, 1978.

The fluorinated polymers obtained by the plasma-induced polymerization are preferably derived from monomers selected from perfluorinated alkanes and alkenes of from 1 to 10 (preferably 1 to 5) carbon atoms. Illustrative examples of such monomers comprise carbon tetrafluoride, perfluoroethylene, hexafluoroethane, octafluoropropane, hexafluoropropene, decafluorobutane, decafluoroisobutane, octafluorobutene, etc., optionally mixed with coadjuvants such as oxygen, hydrogen, inert gases (e.g. argon) etc.

At the end of the polymerization, the layer of fluorinated polymer preferably has a thickness of from 1 to 1000 nm, particularly of from 1 to 500 nm, and, most preferred, of from 2 to 20 nm.

The method according to the present invention is suitable for application to fabricated bodies of any shapes and sizes, obtained from polymers characterized by a range of contact angles with water which, on the average, is lower than 90°, such as polyolefins (e.g. high-density, medium-density and low-density linear polyethylene, polypropylene, ethylene-propylene copolymers, ethylene-propylene-diene copolymers, polystyrene and high-impact polystyrene, polystyrene modified with polar monomers); acrylonitrile-styrene copolymers (SAN), acrylonitrile-butadiene-styrene terpolymers (ABS); polyesters such as poly(ethylene)terephthalate and poly(butylene terephthalate); polyamides; polyesteramides; polycarbonates; poly(methyl methacrylates); polyacrylates, and mixtures thereof.

The fabricated bodies treated in accordance with the method of the present invention may advantageously be used in all of those sectors in which a high water repellency and/or a low friction with water are required, for instance, in the nautical field or in the preparation of medical equipment and elements.

In order to provide a better understanding of the present invention some illustrative, non-limitative examples are given below.

In all examples an aluminum reactor (manufactured by Kenotec, Binasco, Italy) of cylindrical shape, with an internal diameter of about 40 cm and a height of about 30 cm, was used. The evacuation of the reactor, in order to be able to carry out the plasma-induced polymerization, was secured by a pumping device capable of providing reduced pressures of the order of 0.05 Pa. The necessary gases for the treatment were fed to the reactor by means of electronically controlled flow meters.

While the remainder of the chamber was kept electrically connected with the ground, a radiofrequency was applied to the upper electrode. An "Advanced Energy MTN 500" frequency generator, capable of supplying a power of from 0 to 500 W at 13.56 MHz was used. The triggering of the discharge induced the fragmentation of the fluorinated monomers added to the gas mixture, and the subsequent deposition of a polymer onto the surface. The deposition rate and the chemical nature of the deposited polymer could be varied by suitably adjusting the characteristic plasma parameters, such as applied power, gas pressure and gas flow rate, as described by H. Yasuda, ibid.

## EXAMPLE 1

For the experimental tests small plates (12.5 x 12.5 x 0.3 cm) of high density polyethylene (Eraclene ® QG 6015, Montedipe), referred to in the following as "HDPE", was used.

These plates were dipped in a chromic blend (98 parts by weight of sulfuric acid and 2 parts by weight of potassium dichromate), the temperature being kept at 353 K. The surface morphology was checked by SEM (Cambridge Stereoscan 604, Cambridge, U.K.) and it was found that it met the required conditions when the dipping time was within the range of from 6 hours to 3 days.

The plates were then washed with water and acetone, dried, charged to the above plasma reactor and coated with a layer of fluorinated polymer. The fluorinated gas was perfluoropropene, $C_3F_6$ (produced by Montefluos, Spinetta Marengo, Italy). In Table 1 below the operating conditions of the plasma reactor are reported.

TABLE 1

| Radiofrequency : | 13.56 MHz |
| --- | --- |

TABLE 1   (continued)

| Power : | 100 W |
|---|---|
| Pressure : | 2 Pa |
| Gas flow rate : | 29 ml(STP(*)) /minute |
| Speed of deposition of $C_3F6$ polymer : | 8.6 nm/minute |

(*) STP = Standard Temperature and Pressure

The thickness of the deposited film, controlled by means of the treatment time, was evaluated by means of a quartz microbalance (Intellemetrics, Clydebank, U.K.). A density of 2.2 $g/cm^3$ was assumed, which value is the same as the value reported for polytetrafluoroethylene (PTFE) in Encyclopaedia of Modern Plastics (McGraw-Hill, New York, 1987, page 517).

In Table 2, details of the experimental tests are reported.

TABLE 2

| Sample | Stay Time in Chromic Mixture, hours | Thickness of the Fluorinated Polymer (nm) |
|---|---|---|
| A* | 0 | 5 |
| B* | 1 | 5 |
| C | 6 | 5 |
| D | 24 | 5 |
| E | 36 | 5 |

* comparative example

In Figure 3, SEM microphotographs taken at a magnification of 5,000 are displayed, which show an untreated HDPE (3-a, sample "A" before the polymer deposition from plasma); HDPE corroded with the above chromic blend for 1 hour (3-b, sample "B", before the deposition); HDPE corroded with the chromic blend for 24 hours (3-c, sample "D", before the deposition); HDPE corroded with the chromic blend for 24 hours and coated with 5 nm of fluoropolymer (3-d, sample "D", after the deposition).

The microphotograph in Figure 3-a shows the smooth, typical surface of an untreated material. In Figure 3-b an incipient roughness is visible, but the average size of the observed structures is of less than 0.1 $\mu$m. In Figure 3-c, the surface morphology can be seen, which corresponds to a treatment time of 24 hours. It can easily be seen that the typical size of the surface structures has increased up to a value of the order of 0.5 $\mu$m. As the chemical attack continues, the surface roughness increases. Figure 3-d shows that the coating of the sample with 5 nm of fluoropolymer does not cause meaningful changes in morphology.

The water advancement and recession contact angles of the samples were then measured. For that purpose, a Ramé-Hart instrument for measuring the contact angles was used (Ramé-Hart, Mountain Lakes, New Jersey, U.S.A.). The method of sessile drop was used, according to the procedures taught by S. Wu ibid.

In Table 3, the water advancement (A.A.) and recession (R.A.) contact angles (expressed as degrees) are reported, which are shown by corroded surfaces not coated with fluorinated polymer, and corroded, coated surfaces. The data relating to sample "A" correspond to the untreated substrate (HDPE) and to the fluoropolymer deposited by plasma polymerization on a smooth surface.

TABLE 3

| Sample | Corroded, not coated | | Corroded, coated | |
|---|---|---|---|---|
|  | A.A. | R.A. | A.A. | R.A. |
| A* | 96 | 63 | 116 | 95 |
| B* | 80 | 30 | 130 | 20 |
| C | 65 | 0 | 165 | 140 |
| D | 58 | 0 | 163 | 148 |
| E | 50 | 0 | 170 | 145 |

* comparative example

From the data reported in Table 3 it can be taken that the corrosion of the surface in an oxidizing environment causes a simultaneous decrease in contact angles, even causing - with sufficiently long treatment times - the recession angle to become zero.

In the case of sample "B" (see SEM microphotograph in Figure 3-b), the generation of the surface roughness and the subsequent coating with fluorinated polymer induces a meaningful change in contact angles. However, in this case, inasmuch as the roughness is not sufficient to form a "composite interface" with water, a wide range of possible contact angles may be observed, which indicates that the surface is still rather wettable.

In the case of samples "C", "D" (see relevant SEM microphotographs in Figures 3-c and 3-d) and "E", on the contrary, a sufficiently high roughness is observed, a "composite interface" is formed, and from Table 3 extremely high values of contact angles can be observed, which indicate an extremely high water repellency of the resulting surface.

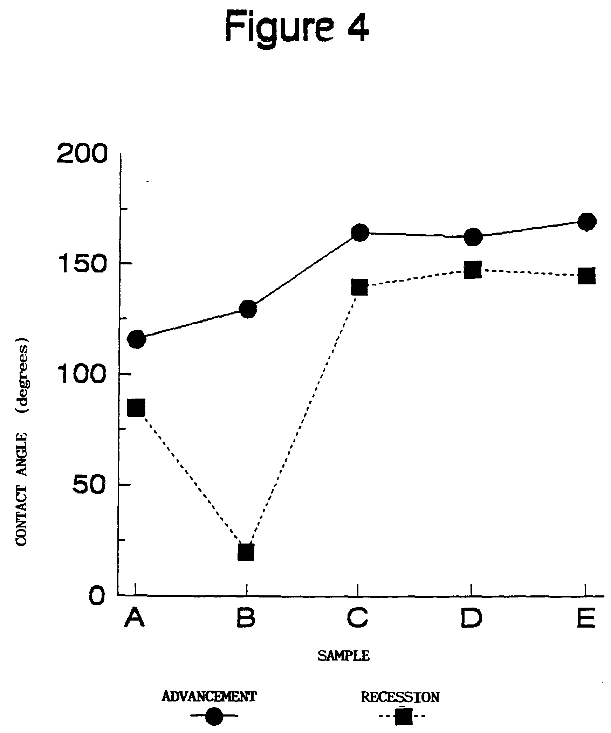

From Figure 4, one may take that the values of contact angles range from relatively low values (untreated, coated sample "A"), through sample "B", in which the roughness induces a very wide range of possible contact angles, to an extremely hydrophobic situation (samples "C", "D" and "E").

## EXAMPLE 2

In this case, for the experimental tests small plates of high-density polyethylene and isotactic polypropylene (PP), (Moplen® SP 179, produced by Himont, Milan, Italy) were used. In both cases, the size was 12.5 x 12.5 x 0.3 cm.

The treatments with the chronic blend and with plasma, as well as the observations by SEM and the measurements of water contact angles were carried out with the same procedures and under the same conditions as in the preceding example.

In this case, the performance of HDPE and PP was compared, changing the thickness of deposited layer and the fluorinated monomer used.

In these tests, besides perfluoropropene, perfluoropropane was used ($C_3F_8$, produced by UCAR, Oevel, Belgium, deposition rate 4.9 nm/minute).

In Table 4, the materials used and the operating conditions are summarized, and in Table 5 the corresponding contact angles are reported. The conclusions are analogous to those already drawn in Example 1.

TABLE 4

| Sample | Material | Stay Time in Chromic Blend (hrs) | Fluorinated Monomer | Film Thickness (nm) |
|---|---|---|---|---|
| F | PE | 24 | $C_3F_6$ | 2 |
| G | PE | 24 | $C_3F_6$ | 20 |
| H | PE | 24 | $C_3F_8$ | 2 |
| I | PE | 24 | $C_3F_8$ | 5 |
| J | PE | 24 | $C_3F_8$ | 20 |
| K* | PP | 0 | $C_3F_6$ | 5 |
| L* | PP | 1 | $C_3F_6$ | 5 |
| M | PP | 24 | $C_3F_6$ | 5 |
| N | PP | 24 | $C_3F_8$ | 5 |

* comparative example

Table 5

| Sample | After Corrosion and Coating | |
|---|---|---|
| | A.A. | R.A. |
| F | 168 | 140 |
| G | 162 | 143 |
| H | 165 | 142 |
| I | 167 | 141 |
| J | 167 | 142 |
| K* | 116 | 92 |
| L* | 125 | 31 |
| M | 171 | 148 |
| N | 163 | 150 |
| For pristine PP, the corresponding values are: A.A. = 95°, R.A. = 78°. | | |

* comparative example

EXAMPLE 3

For some samples (corroded for 24 hours and coated with 5 nm of polymer, from perfluoropropene plasma), the coefficients of static friction with water were evaluated. The experimental apparatus was derived from the equipment recommended by ASTM D-4518, which relates to the measurement of the static friction coefficients. It consisted in keeping the treated plate anchored at one edge and in lifting the other end of said plate with a constant speed. A water drop of constant size (0.04 ml) was deposited onto a predetermined point of the surface, then the plate was slowly lifted and immediately stopped as soon as the drop started moving. The angle was recorded and the value of static friction was calculated. Said static friction is obtained as the product of gravity acceleration times the sinus of the angle read.

In Table 6, the results obtained are compared to those obtained on polytetrafluoroethylene (PTFE), a material which is known to be highly water-repellant. The plasma-polymer coating of the non-corroded material makes it possible to obtain a slight improvement in friction with water, but, in any case, much worse values than with PTFE are obtained, probably due to the more heterogeneous chemical structure of the polymers produced by plasma polymerization.

In the case of the corroded, non-coated materials, the increased wettability causes the drop to remain firmly anchored to the surface. On the contrary, in corroded, coated materials, decisive improvements in friction are obtained, even in comparison to PTFE.

TABLE 6

| Treatment | Angle (°) | Friction (ms$^{-2}$) |
|---|---|---|
| PTFE | | |
| Untreated PTFE | 20 | 3.3 |
| HDPE | | |
| Untreated HDPE | (*) | (*) |
| Non-corroded, coated HDPE | 32 | 5.1 |
| Corroded, uncoated HDPE | (*) | (*) |
| Corroded, coated HDPE | 12 | 2.0 |
| PP | | |
| Untreated PP | 30 | 4.8 |
| Non-corroded, coated PP | 28 | 4.6 |
| Corroded, uncoated PP | (*) | (*) |
| Corroded, coated PP | 10 | 1.6 |
| (*) The drop remains firmly anchored to the wall up to very high angle values. | | |

**Claims**

1. Method of reducing the friction coefficient between water and surfaces of articles manufactured from polymeric material having an average value of the contact angle with water of less than 90° and of increasing the water repellency of said surfaces, which method consists essentially of:

   (a) treating the surface of the article with a corrosive agent selected from acidic oxidizing agents and alkaline agents, until conditions of controlled roughness which are characterized by structures of a size of from 0.2 to 2 μm, preferably of from 0.5 to 1 μm, are obtained; and
   (b) coating the surface thus treated by means of plasma-induced polymerization of at least one fluorinated monomer with a layer of fluorinated polymer, said layer having a thickness of from 1 to 1000 nm.

2. Method according to claim 1, in which the fluorinated polymers are obtained by plasma-induced polymerization of monomers selected from perfluorinated alkanes and alkenes having from 1 to 10 carbon atoms.

**Patentansprüche**

1. Verfahren zum Erniedrigen des Reibungskoeffizienten zwischen Wasser und Oberflächen von aus polymerem Material hergestellten Artikeln, die einen Durchschnittswert des Kontaktwinkels mit Wasser von weniger als 90° aufweisen, und zur Erhöhung der wasserabweisenden Eigenschaften dieser Oberflächen, wobei das Verfahren im wesentlich besteht aus:

(a) Behandeln der Oberfläche des Artikels mit einem korrosiven Mittel, das ausgewählt ist aus sauren oxidierenden Mitteln und alkalischen Mitteln, bis Bedingungen einer kontrollierten Rauhigkeit erreicht sind, die durch Strukturen eine Größe von 0.2 bis 2 µm, vorzugsweise 0.5 bis 1 µm, gekennzeichnet sind, und
(b) Beschichten der so behandelten Oberfläche mit Hilfe plasma-induzierter Polymerisation wenigstens eines fluorierten Monomers mit einer Schicht eines fluorierten Polymers, wobei die Schicht eine Dicke von 1 bis 1000 nm besitzt.

2. Verfahren gemäß Anspruch 1, bei dem die fluorierten Polymere erhalten werden durch plasma-induzierte Polymerisation von Monomeren, die ausgewählt sind aus perfluorierten Alkanen und Alkenen mit 1 bis 10 Kohlenstoffatomen.

**Revendications**

1. Procédé pour diminuer le coefficient de frottement entre l'eau et des surfaces d'articles en matière polymère, présentant une valeur moyenne de l'angle de contact avec l'eau inférieure à 90°, et pour augmenter le pouvoir de répulsion desdites surfaces à l'égard de l'eau, procédé qui consiste essentiellement en les étapes suivantes :

(a) traiter la surface de l'article avec un agent corrosif, choisi parmi les agents oxydants acides et les agents alcalins, jusqu'à l'obtention d'une rugosité réglée qui est caractérisée par des structures ayant une taille de 0,2 à 2 µm, de préférence de 0,5 à 1 µm, et
(b) revêtir la surface ainsi traitée, au moyen d'une polymérisation provoquée par plasma d'au moins un monomère fluoré, d'une couche de polymère fluoré, ladite couche ayant une épaisseur de 1 à 1000 nm.

2. Procédé selon la revendication 1, dans lequel les polymères fluorés sont obtenus par polymérisation provoquée par plasma de monomères choisis parmi les alcanes perfluorés et les alcènes perfluorés, ayant de 1 à 10 atomes de carbone.

# Figure 1

# Figure 2

FIG. 3

3-a

3-b

3-c

3-d

# Figure 4